# EUROPEAN PATENT SPECIFICATION

(11) **EP 3 093 427 B1**
(45) Date of publication and mention of the grant of the patent: **20.11.2019**
(21) Application number: 15167729.1
(22) Date of filing: 14.05.2015
(51) Int. Cl.: E21B 19/083, F16H 19/06, H01Q 1/08

(54) **DRIVE FOR TUBULAR MEMBER, CURLING STRIP AND TUBULAR BOOM**
ANTRIEB FÜR ROHRFÖRMIGES ELEMENT, EINROLLSTREIFEN UND ROHRFÖRMIGER AUSLEGER
ENTRAÎNEMENT POUR ÉLÉMENT TUBULAIRE, BANDE À FRISER ET FLÈCHE TUBULAIRE

(43) Date of publication of application: 16.11.2016
(73) Proprietor: Centrum Badan Kosmicznych Polskiej Akademii Nauk, 00-716 Warszawa (PL)
(72) Inventor: Grassmann, Kamil, 03-149 Warszawa (PL); Seweryn, Karol, 31-607 Kraków (PL)
(74) Representative: Bury, Lech Marek

(56) References cited:
- WO-A1-2015/056114
- WO-A2-2012/089189
- US-A- 3 360 894
- US-A- 3 361 377
- US-A- 3 601 940
- US-B1- 6 256 938

## Description

### Field of the invention

The invention concerns retractable mechanism for tubular extensible members made of strips woundable on the drum. More precisely invention concerns transferring longitudinal force to extensible tubular member, which causes unwinding the extensible member form the drum.

### State of the art

Tubes curled from strips are used in numerous applications in devices characterized by the ability to change their length, which have to combine small mass, high durability and high stiffness. This relates in particular to booms, manipulators and antennas used in aviation and space exploration. A tubular member made of an elastic material, i.e. a material having a high yield strength, e.g. spring steel, after straightening and winding on a drum has small size and mass. Upon unwinding from drum the tape resumes its nominal form in which it has been hardened. In this way, after unwinding a strip of tape from the drum it assumes a shape of thin-walled tube having advantageous strength to mass ratio. Such strip tube with a mechanism of winding and unwinding it from drum was disclosed e.g. in US Patent 3,601,940 and in international patent application WO/1996/008671. US 3601940 discloses an improved extendible tubular boom, particularly suitable for use in space, wherein interlocking side edges of the curled thin material of the boom cooperate to form a helical seam along the length of the boom. US3601940 discloses the preamble of claim 1 and 7.

Issues related to control mechanisms of winding and unwinding of tubular booms made of curled tubes were addressed in international patent application WO2015/056114 in which escapement wheel connected with drum and driven by the arrangement of spring and electromagnet was proposed.

The systems using tubular extensible members are typically used in lightweight and compact devices, which require also the high longitudinal stiffness. They are usually drilling apparatus dedicated for geological drilling are an excellent example of the systems where the extensible tubular booms are used. In the drilling systems a few different techniques of the mining could be listed. One of the method is a coring process, where the samples of the soil are collected in shape of short cylinders from a mining borehole. During that process the coring device have to be transported deep under the surface and have to be pushed to the ground. In many applications mentioned drilling devices have to be transported to hardly available places, using specialized mobile devices e.g. UAVS, mobile robots or landers and rovers (in case of space environment). From that reason the main requirement for the drilling apparatus is a low weight and small dimensions.

The extensible tubular members are used in linear actuators, which are lightweight, strength and stiff devices. Linear actuators using tubular booms in space and terrestrial environment are found application in e.g. robotic arms or communication antennas. It is the compactness of these devices that has gained their acceptance for use in space satellites and for certain ground applications requiring extensible and/or retractable booms, actuators, antennas and the like. This compactness is primarily due to the use of very thin strip materials but is also due to the general compactness of the storing and deploying mechanisms as a whole. Additionally, for the space applications deployable mechanism is required to demonstrate high reliability and provide reasonable compromise between the weight of the boom and its mechanical durability. Tubular booms are known to have this advantages.

The tubular member is formed of a single overlapped strip of pretreated springy material, a commonly a steel, copper, beryllium or titanium alloy. It is know, that spring materials which are hardened and tempered by heat treatment may be formed into a desired shape, without substantially altering the temper or other physical qualities of the material, by means of elastic deformation applied concurrently with a stress relieving heat treatment at a temperature slightly less than the original tempering temperature. The strip is usually stored by being wound on a drum in flat configuration as a coil shape whose axis is at right angles to the longitudinal axis of the strip. As the strip is deployed by unwinding from the drum it reverts to a tubular formation. Unreeled tubular member as a thin wall cylindrical element has a high transverse stiffness. The longitudinal load applied to the tubular boom causes increasing the stress in II section of the tubular member Fig.lb. This section II where the strip is turning from flat into tubular shape is particularly fragile and susceptible to damages. In case of the load applied perpendicularly to axis of tubular element the risk of damage element could be reduced by add dedicated grommets or set of rollers. However this solution doesn't increase the resistance for the longitudinal loads.

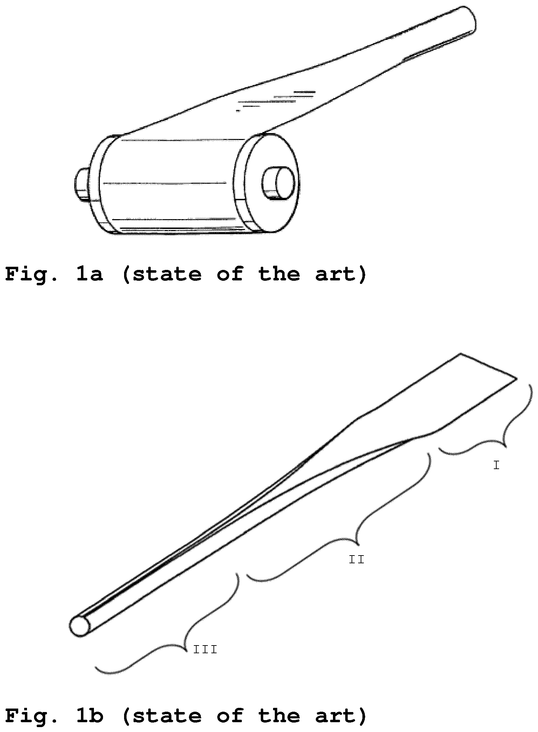

For the unwinding mechanisms of tubular member it is important to select manner and point of application of the force causing the reeling and unreeling of the member from the drum. The force should be applied in such a manner as not to generate additional stress on the tubular boom, particularly in the section II indicated in Fig. 1b. It is well known that it is advantageous that the force expanding the tube was pulling force.

In US patent applications nos. US3361377A, US3434674A and US3144215A a different mechanism for unwinding the elastic tubular member from a drum is disclosed. Furthermore American patent application no. US3360894 discloses an extendible boom comprising an elongate strip of resilient material having a plurality of spaced tab members firmed on one of the longitudinal edges thereof and a plurality of slotted projecting members formed on the other of the longitudinal edges thereof. Said patent US3360894 discloses also an extendible boom system comprising the strip, means for storing said strip in a flat coiled condition; means for withdrawing said strip longitudinally from said coiled condition; means for rolling said strip about a longitudinal axis thereof in the form of a cylinder with a diameter less than the natural diameter of said boom as said strip is withdrawn from said coiled condition to cause successive entry of said slotted members into said guide slots, whereby the slots in said slotted members engage the related tab members as said boom in extended to assume its natural diameter.

One of the crucial restrictions in present solutions is a maximal value of the generated force by the linear actuator using tubular member. This issue is related to methods of transferring force from motor to thin walled tubular member. Currently used unreeling mechanisms can be divided into two groups. The first group of solutions is based on the unwinding of the tubular member by rotating the drum on which it is wound. However, this approach does not allow to generate large forces, because it add a strain on the II zone. The second group of solutions transfers the load from motor to thin-walled element by a small area, which results in high contact stresses.

In the mining applications it is required to press the drilling device to surface with force around 500N. Additionally, the pressing system of the drilling device have to provide rigid linear support of the drilling head. Present solutions does not allow to transfer high load to the tubular member, mainly because of too high stress in transitional phase - number II in Fig. 1b.

The system consisting of the unwinding mechanism and the storage in the form of a drum can be treated as a linear actuator, whose function is to generate linear motion on the beginning of the tube. In many applications the linear actuator is required to guarantee self-locking capability. The self-locking mechanism has the ability to withstand a force acting along the axis of the tubular member without power the drive.

For space applications, mechanisms using coiled tubing can be used e.g. in reconfigurable arms of the manipulators that have reconfigurable length. In systems operating in orbit one of the key parameters of the mechanism is efficiency of energy consumption. Therefore, it is expected from the mechanism using coiled tubing that it does not consume energy in passive mode.

### Summary of the invention

It is the object of the invention to solve the problems with state of the art listed above and simultaneously meet the design requirements listed above.

A drive according to the invention is dedicated for a tubular member made of elongated curling strip partly wound on a drum rotatable on the first axis, and partly curling around the second axis into that tubular member. The first axis is perpendicular to the second axis. The tubular member is extendable and retractable with rotation of the drum. The strip is provided with a number of protrusions distributed on its surface along its length. The drive comprises a threaded element rotatable around the second axis and an abutment element (4,5) forming between each other a space adapted to accommodate a wall of the tubular member in such a manner that the first side of the wall is in contact with the threaded element and the second side of the wall is in contact with the abutment element. The thread of the threaded element corresponds to the protrusions of the strip curled into the tubular member in such a manner that the protrusions fit into the thread and cooperate with said thread during rotational movement of the threaded element, so that rotational movement of the threaded element is transformed into axial movement of the tubular member. Said drive further comprises a rotation blocking means engaged with the tubular member and blocking rotation of the tubular member around second axis with respect to the drum.

Advantageously, the protrusions have a shape of a sector of a sphere and the thread of the threaded element is a gothic thread. Such thread is cooperates well with spherical protrusions.

When tubular member has partially open C-shaped cross- section and has a slit along its length, rotation blocking means are advantageously realized as rotation blocking component located in the slit. The dimensions of blocking component are selected so that it is in contact with both edges of the tubular member forming the slit. Means for enforcing the rotation of the threaded element such as motor shaft can be then introduced through the slit.

Advantageously the drive comprises means for reduction of a friction between the walls of tubular member and the abutment member, Such means can be provided as teflon strip. Reduction of friction makes the drive less prone to accidental blocking and contributes to lower energy consumption.

The threaded element advantageously is a screw, while the protrusions protrude inwards the tubular member. Then the abutment element is a retaining sleeve.

Alternatively the threaded element is a sleeve threaded from the inside and the protrusions protrude outwards tubular member. The abutment element is then cylindrical body located inside tubular member.

An elongated strip according to the invention is dedicated to be wound on a drum to form a tubular member upon unwinding. According to the invention an elongated strip forming a tubular member upon unwinding from a drum, containing a number of protrusions distributed along its length in such a manner that when the strip is curled into the tubular member these protrusions are located on the same helix, is characterized in that said protrusions are embossed on the strip and are in the form of embossed indentations, preferably circular indentations.

The curling strip forming the tubular member advantageously comprises at least one material selected from a group including spring stainless steel, beryllium bronze, composite of carbon fibers.

Advantageously the diameter of the protrusions is within a range of 10 mm to 15 mm, and the width of the tape is within a range of 60 mm to 80 mm. Such dimensions in are suitable for typical reconfigurable space booms and unfoldable antennas.

The advantage of the invention is that the protrusions are embossed on a strip. Such embossments are easy to manufacture especially in steel strips and can be compressed when the strip is wound on a drum which results in more compact structure.

The depth of these protrusions is advantageously greater or equal 1.3 mm and the spacing between protrusions is greater or equal 24 mm.

Advantageously the strip has 3 rows of the protrusions forming parallel lines of three protrusions along the length of the strip. Such configurations stabilizes the tubular member during unwinding and makes it possible to exert greater force on the tubular member with the drive.

A tubular boom according to the invention is made of curling strip partly wound on a drum rotatable on the first axis, and partly curling around the second axis into a tubular boom, wherein the first axis is perpendicular to the second axis. The strip is a strip according to the invention. The boom is provided with a drive according to the invention for extending or retracing the boom. The drive is run with external motor coupled with the threaded element.

### Description of drawings

The embodiments of invention are below described with reference to the attached of the drawings in which
Fig. 1a shows state of the art tubular member made of curled strip wound on a drum.
Fig. 1b shows state of the art tubular boom made of curled strip with indication of the flat area, tubular area and the transitional area.
Fig. 2a shows longitudinal cross section of the first embodiment of the invention.
Fig.2b shows top view of the first embodiment of the invention.
Fig.2c shows perspective view of the first embodiment of the invention.
Fig. 2d shows longitudinal cross section of the second embodiment of the invention.
Fig. 2e shows top view of the second embodiment of the invention.
Fig. 2f shows perspective view of the second embodiment of the invention.
Fig. 3a shows a side view of a tubular member made of a curled strip according to the invention, having protrusions directed inwardly.
Fig. 3b shows a close-up to a protrusion of a tubular member made of curled strip according to the invention, having protrusions directed inwardly.
Fig. 3c shows a cross section of a tubular member made of curled strip according to the invention, having protrusions directed inwardly.
Fig. 3d shows a top view of a curled strip according to the invention, having protrusions directed inwardly.
Fig. 4a shows a cross section of a tubular member made of curled strip according to the invention, having protrusions directed outwardly.
Fig. 4b shows a top view of a tubular member made of curled strip according to the invention having protrusions directed outwardly.
Fig. 4c shows a side view of a tubular member made of curled strip according to the invention, having protrusions directed outwardly.
Fig. 4d shows a close-up to the protrusion of a curled strip according to the invention, having protrusions directed outwardly.
Fig. 5a shows cross section of an embodiment of a strip according to the invention.

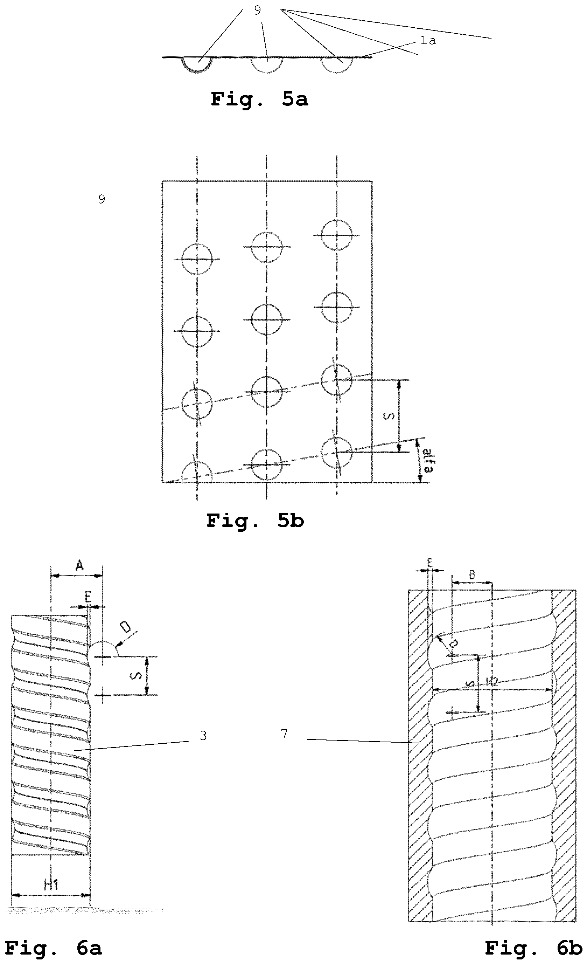

Fig. 5a shows top view of a strip according to the invention.
Fig. 6a shows a screw with external round threads.
Fig. 6b shows sleeve with the internal thread.

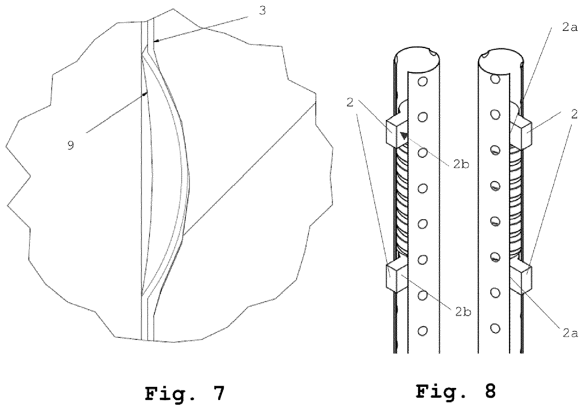

Fig. 7 illustrates cooperation of the embossment provided on a tubular member with a screw.
Fig. 8 illustrates operation of rotation blocking component and its interaction with tubular member.

### Embodiments of the invention

The tubular member known in the prior art is shown in Fig. 1a and 1b. Experiments have shown that the transition region II in the tape is not able to move high loads, while the third section of the strip is able to transfer high longitudinal load.

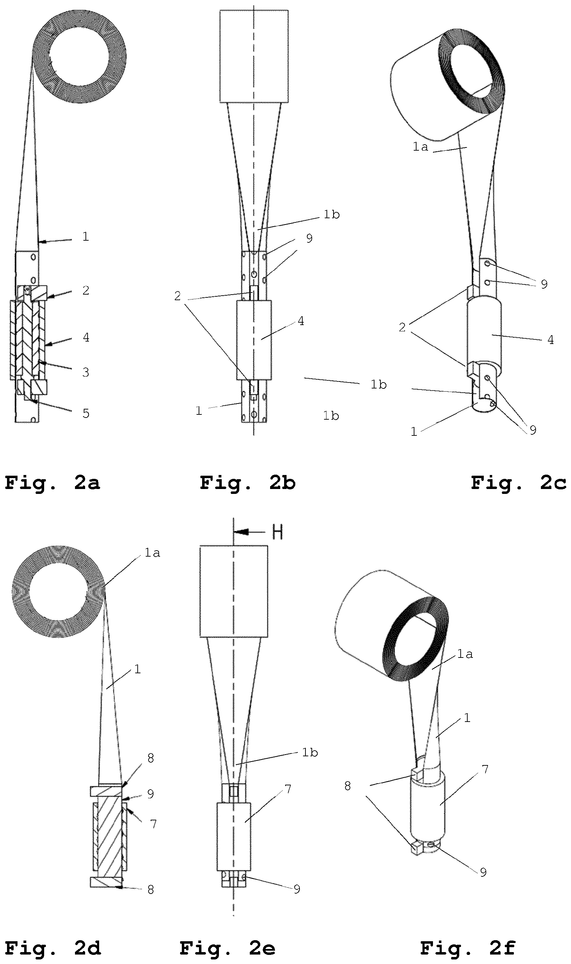

In the first embodiment of the invention illustrated in Fig. 2 a-c, the threaded element is a screw 3 located inside tubular member 1, which is from outside surrounded by the abutment element having a form of retaining sleeve 4. The tubular member 1 is formed of a curling strip la and has protrusions 9 extending inwardly and provided in a form of a spherical embossments on its surface. The tubular member is partially open and has a slit 1b along its length. The embossments on the tubular member 1 are distributed on a helix with a constant pitch. These embossments constitute an abutment surface for the thread of the screw 3. The spherical shape of the embossments and thread forming connection transferring force from motor to tubular element. The inner surface of the tubular member has a low coefficient of static and dynamic friction. This coefficient can be additionally decreased by additional layer covering the strip la or the threaded screw 3 or both. This layer can be friction lowering material applicable for the conditions in which drive is supposed to operate. For the space application Teflon is a typical choice. The interface of the bearings fastening of the screw 3 is located in the opening area of the retaining sleeve 4.

The rotation of the tubular member with respect to the retaining sleeve 4 is blocked with blocking component 2. It is necessary to remove a rotational degree of freedom of tubular member 1. Otherwise interaction of protrusions with screw would cause not only linear movement of the tubular member 1 but also its rotation. Hence it is required to prevent the tubular member 1 from rotation with respect to the drum on the longitudinal axis H. This is achieved by rotation blocking means that have a form of blocking component 2, having two guide surfaces indicated by 2a, 2b, as presented in Fig. 8. These surfaces 2a and 2b are spaced by a distance equal to a width of the slit 1b in the tubular member 1. Cooperation of the edges of the slit 1b with surfaces 2a and 2b results in blocking possibility of rotation of the tubular member as the width of the slit 1b is determined. It is so because the shape of the tubular member 1 is determined by the space between the screw 3 and retaining sleeve 4 to which blocking component 2 is attached.

As the tubular member 1 is partially open it is easy to insert the means for rotating the screw 3 through the slit 1b. These means can be constituted by a generic electric motor with a suitable interface. As the screw 3 is rotated the embossments on a tubular member cooperate with the thread of the screw 3. The retaining sleeve 4 prevents the tubular member 1 from uncurling while blocking components 2 prevents its rotation. Hence, a longitudinal force is exerted on the tubular member 1. The direction of the force depends on the direction of rotation. Accordingly the strip la forming the tubular member 1 is either wound on a drum or unwound from a drum.

In the second embodiment of the invention the threaded element is an internally threaded sleeve 7. Threaded sleeve 7 is located outside of the tubular member. In this configuration the protrusions on a tubular member 1 are extending outwardly. They are provided in a form of embossments. Inside the tubular member there is located an abutment element - not shown in a drawings. Preferably it is a cylindrical body that has a low static and dynamic coefficient of friction. That cylindrical body prevents tubular member from being over curled as embossments interact with the thread of the threaded sleeve 7. The rotation of the tubular member 1 around its longitudinal axis, with respect to the drum is prevented by means of guide means 8. These means may be connected with cylindrical body that acts as rotation blocking means.

In this embodiment there is no need to introduce the coupling with external motor through the slit in the tubular member 1. The motor can be directly coupled to the threaded sleeve 7 as it is located on the outer side of the drive. If alternative rotation blocking means not shown in the figures - are applied close to the intermediate area II between the tubular member 1 and the flat curling strip 1a it is possible to use the drive according to the invention with the tubular boom that has a form of full pipe without slit 1b.

Naturally in both embodiments described above the axis of rotation of the threaded element 3,7 coincides with the longitudinal axis of the tubular member 1.

Application of a threaded element cooperating with embossments on the tubular member, makes it possible to generate longitudinal force exerted on the tubular member. The maximal value of the force depends only on the strength of the material of thin-walled element and the number of embossments.

The unused part of the tubular member 1 is stored in the form of a flat strip 1a wound on the drum. This method of storage of the tubular member significant causes increasing the compactness of the system.

It is possible to increase the maximal value of the longitudinal force by increasing a number of protrusions that simultaneously cooperate with threaded element 3,7. The maximal number of protrusions is limited by the fact that the more protrusions the more loosely the curled strip la forming tubular member 1 must be wound on a drum. That reduces the compactness of the tubular booms.

The particular advantage of making protrusions 9 by embossing is the fact that embossments in some materials such as steel can be partially flattened when the strip la is wound on a drum.

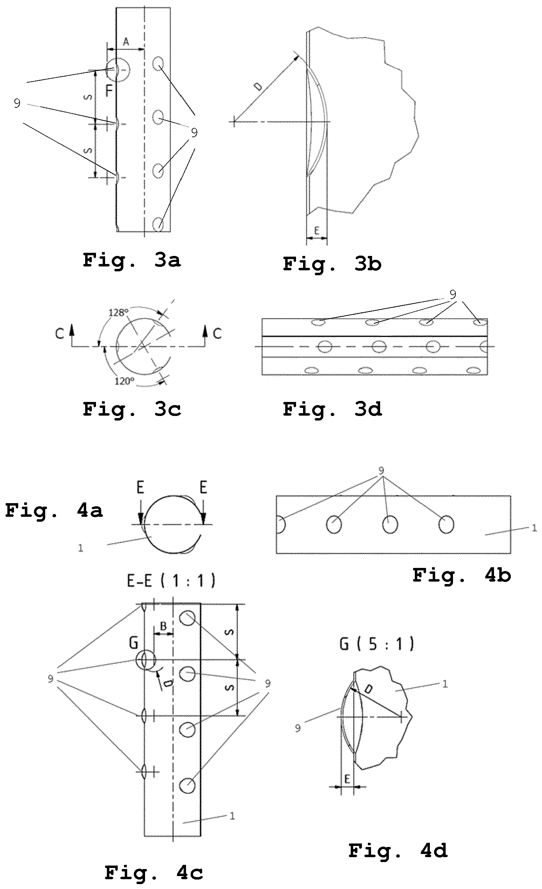

A tubular member 1 with protrusions extending inwardly is shown in Fig. 3a and Fig. 3b. Fig. 3c presents the cross section of this tubular member 1 while Fig 3d presents the strip from which the tubular boom is made of in its flat form.

A tubular member 1 with protrusions extending outwardly is shown in Fig, 4c and Fig, 4d. Fig. 4a presents the cross section of this tubular member 1 while Fig 4d presents the strip from which the tubular boom is made of in its flat form.

Strip la with embossments acting as protrusions can be wound tightly and compactly irrespectively of the side embossments extend to when the strip is curled into tubular member 1. These embossments after the strip la is curled into tubular member 1a are located on the single helix with constant pitch.

For both embodiments the maximal value of longitudinal force exerted by the drive can be increased by increase of the number of protrusions 9 cooperating simultaneously with the thread of the threaded element. This effect can be obtained either by providing longer threaded element or by providing a strip la that after being curled into tubular member 1 has more protrusions 9 per a coil of the helix.

It is possible to accomplish that by distributing the protrusions 9 in parallel rows along the strip la and forming inclined lines across its width, as presented in Fig. 5b. Across section of to the edge of the tube as shown in Fig. 5. Centers of protrusions 9 are arranged on a line inclined to the edge at an angle and occupy the entire surface of the strip la. The distance between consecutive lines of embossments is S, which is equal to the value of the thread pitch in the threaded element 3 or 7. Three protrusions per line, i.e. 3 rows of protrusions along the strip la, proved to be reasonable compromise between the maximal value of longitudinal force exerted on the tubular member 1 and the ease and reliability of winding and unwinding.

In both embodiments prepared spherical embossments are made to a defined depth E in the figure Fig. 3b and Fig. 4d from the surface of a tubular member. The value of the depth of the rib corresponds to the depth of the thread on threaded elements shown in Fig. 6a and Figure 6b. Threaded element 3 or 7 have a thread with a pitch equal to the distance between the series of embossments i.e. approximately equal to the value of S. Gothic thread is known for its good cooperation with spherical protrusions. It is used e.g. in ball screw systems.

Centers of spherical embossments on tubular member are placed in line, which is inclines in alpha angle, which is identical with helical angle of thread. In the thread profile in threaded sleeve 7 and screw 3 showed in Fig. 6a and Fig 6b, the diameter of circle is equal to diameter of embossments in tubular member.

During the rotation of the threaded element 3 or 7, the surface of the screw touches the embossment on the tubular member as shown in Fig. 7. For the skilled in the art is known principle of operation of screw mechanism, on which is based the instant invention. Thanks to the many embossments on the surface of a tubular member, the pushing force is divided Into lot of number of points of contact between the threaded element. Due to this fact presented invention is able to generate large longitudinal forces without damage the tubular element.

It is obvious that the two embodiments described above are not limiting but only illustrating the invention. Those skilled in the art after reading the specification above can easily provide modifications for particular elements. It is possible for instance to provide rotation blocking means in the form of magnets cooperating with magnetized areas on the tubular member. It is also possible to use magnetic coupling to rotate the screw 3 without using a coupling through the slit 1b. However, it is clear, that all those modifications are within the scope of invention as defined in the attached claims.

## Claims

1. A drive for a tubular member (1) made of an elongated curling strip (la) partly wound on a drum rotatable on the first axis, and partly curling around the second axis (H) into the tubular member (1), wherein the first axis is perpendicular to the second axis (H), the tubular member (1) being extendable and retractable with rotation of the drum,
the strip (1a) being provided with a number of protrusions (9) distributed on its surface along its length, **characterized in that** said drive comprising a threaded element (3,7) rotatable around the second axis (H) and an abutment element (4,5) forming between each other a space adapted to accommodate a wall of the tubular member (1) in such a manner that the first side of the wall is in contact with the threaded element (3,7) and the second side of the wall is in contact with the abutment element (4,5), wherein the thread of the threaded element (3,7) corresponds to the protrusions (9) of the strip curled into the tubular member (1) in such a manner that the protrusions (9) fit into the thread and cooperate with said thread during rotational movement of the threaded element (3,7) so that rotational movement of the threaded element (3,7) is transformed into axial movement of the tubular member (1), said drive further comprising a rotation blocking means (2,8) engaged with the tubular member (1) and blocking rotation of the tubular member (1) around the second axis (H) with respect to the drum.

2. The drive according to the claim 1, **characterized in that** the protrusions (9) have a shape of a sector of a sphere and the thread of the threaded element (3,7) is a gothic thread.

3. The drive according to the claim 1 or 2, **characterized in that** the tubular member (1) has partially open C-shaped cross- section and has a slit (lb) in which rotation blocking component (2) is located wherein dimensions of blocking component (2) are selected so that it is in contact with both edges of the tubular member (1) forming the slit (1b) and means for enforcing the rotation of the threaded element are introduced through the slit (1b),

4. The drive according to any of the claims 1 to 3, **characterized in that** it comprises means for reduction of a friction between the walls of tubular member (1) and the abutment element (4,5).

5. The drive according to any of the claims 1 to 4 **characterized in that** the threaded element is a screw (3), the protrusions (9) protrude inwards the tubular member (1) and the abutment element is a retaining sleeve (4).

6. The drive according to any of the claims 1 to 4, **characterized in that** the threaded element is a sleeve threaded from the inside, the protrusions (9) protrude outwards tubular member (1) and the abutment element is cylindrical body (5) located inside tubular member (1).

7. An elongated strip (1a) forming a tubular member (1) upon unwinding from a drum containing a number of protrusions distributed along its length in such a manner that when the strip is curled into the tubular member the protrusions are located on the same helix, **characterized in that** protrusions (9) are embossed on the strip (1a) and are extending inwardly , preferably provided in a form of a spherical embossments on its surface.

8. The strip according to the claim 7, **characterized in that** it comprises at least one material selected from a group including spring stainless steel, beryllium bronze, composite of carbon fibers.

9. The strip according to the claim 8, **characterized in that** the diameter of the protrusions is within a range of 10 mm to 15 mm, and the width of the tape is within a range of 60 mm to 80 mm.

10. The strip according to the claim 9, **characterized in that** the depth of protrusions is greater or equal 1.3 mm and the spacing between protrusions is greater or equal 24 mm.

11. The strip according to any of the claims 7 to 10, **characterized in that** it has 3 rows of protrusions (9) forming parallel lines of three protrusions (9) along the length of the strip (1a).

12. The strip according to any of the claims 7 to 11, **characterized in that** it is covered with friction reducing layer.

13. A tubular boom made of curling strip (1a) partly wound on a drum rotatable on the first axis, and partly curling around the second axis into a tubular member, wherein the first axis is perpendicular to the second axis,
the strip (1b) is the strip as defined in any of the claims 7 to 12,
the boom being provided with a drive as defined in any of the claims 1 to 6, wherein external motor is coupled to the threaded element (3,7) for rotating it.

## Patentansprüche

1. Ein Antrieb für ein rohrförmiges Element (i) aus einem länglichen Rollband (1a), der teilweise auf einer um die erste Achse drehbaren Trommel aufgewickelt und teilweise um die zweite Achse (H) zu einem rohrförmigen Element (1) gewickelt ist, wobei die erste Achse
senkrecht zur zweiten Achse (H) ist, wobei das Rohrelement (1) durch Drehen der Trommel ein- und ausfahrbar ist,
wobei das Band (1a) mit einer Anzahl von Vorsprüngen (9) versehen ist, die auf seiner Oberfläche entlang seiner Länge verteilt sind, **dadurch gekennzeichnet, dass** der genannte Antrieb ein Gewindeelement (3, 7), das um die zweite Achse (H) drehbar ist, und ein Anschlagelement (4, 5) umfasst, die zwischen einander einen Raum bilden, der so angepasst ist, dass er eine Wand des rohrförmigen Elements (1) aufnehmen kann, dass die erste Seite der Wand in Kontakt mit dem Gewindeelement (3, 7) und die zweite Seite der Wand in Kontakt mit dem Widerlagerelement (4, 5) ist, wobei der Gewindegang des Gewindeelements (3 ,7) den Vorsprüngen (9) des in das rohrförmige Element (1) eingerollten Streifens derart entspricht, dass die Vorsprünge (9) in das Gewinde passen und mit dem Gewinde während der Drehbewegung des Gewindeelements (3, 7) zusammenwirken, so dass die Drehbewegung des Gewindeelements (3, 7) in eine axiale Bewegung des Rohrelements (1) umgewandelt wird, wobei der Antrieb ferner ein mit dem rohrförmigen Element (1) in Eingriff stehendes Drehblockiermittel (2 ,8) umfasst, das die Drehung des rohrförmigen Elements (1) um die zweite Achse (H) in Bezug auf die Trommel blockiert.

2. Der Antrieb nach Anspruch 1, **dadurch gekennzeichnet, dass** die Vorsprünge (9) die Form eines Kugelsektors aufweisen und das Gewinde des Gewindeelements (3, 7) ein gotisches Gewinde ist.

3. Der Antrieb nach Anspruch 1 oder 2, **dadurch gekennzeichnet, dass** das Rohrelement (1) einen teilweise offenen C-förmigen Querschnitt und einen Schlitz (1b) aufweist, in dem sich eine Drehblockierkomponente (2) befindet, wobei die Abmessungen der Blockierkomponente (2) so gewählt sind, dass sie mit beiden Kanten des den Schlitz (1b) bildenden Rohrelements (1) in Kontakt steht und die Mittel zur Durchsetzung der Drehung des Gewindeelements durch den Schlitz (1b) eingeführt sind.

4. Der Antrieb nach einem der Ansprüche 1 bis 3, **dadurch gekennzeichnet, dass** er Mittel zur Reduzierung der Reibung zwischen den Wänden des Rohrelements (1) und dem Widerlagerelement (4, 5) umfasst.

5. Der Antrieb nach einem der Ansprüche 1 bis 4, **dadurch gekennzeichnet, dass** das Gewindeelement eine Schraube (3) ist, die Vorsprünge (9) nach innen in das Rohrelement (1) ragen und das Widerlagerelement eine Haltehülse (4) ist.

6. Der Antrieb nach einem der Ansprüche 1 bis 4, **dadurch gekennzeichnet, dass** das Gewindeelement eine von innen mit einem Gewinde versehene Hülse ist, die Vorsprünge (9) nach außen ragen und das Widerlagerelement ein zylindrischer Körper (5) ist, der sich innerhalb des Rohrelements (1) befindet.

7. Das längliche Band (la), das beim Abwickeln von einer Trommel ein rohrförmiges Element (1) bildet, das eine Anzahl von Vorsprüngen enthält, die über seine Länge verteilt sind, so dass, wenn das Band in das rohrförmige Element eingerollt wird, die Vorsprünge auf derselben Spirale angeordnet sind, **dadurch gekennzeichnet, dass** die Vorsprünge (9) auf dem Band (la) geprägt sind und sich nach innen erstrecken, vorzugsweise in Form einer sphärischen Prägung auf seiner Oberfläche.

8. Das Band nach Anspruch 7, **dadurch gekennzeichnet, dass** es mindestens ein Material umfasst, das aus einer Gruppe ausgewählt ist, die Feder-Edelstahl, Berylliumbronze und einen Verbundwerkstoff aus Kohlefasern umfasst.

9. Das Band nach Anspruch 8, **dadurch gekennzeichnet, dass** der Durchmesser der Vorsprünge in einem Bereich von 10 mm bis 15 mm und die Breite des Bandes in einem Bereich von 60 mm bis 80 mm liegt.

10. Das Band nach Anspruch 9, **dadurch gekennzeichnet, dass** die Tiefe der Vorsprünge größer oder gleich 1,3 mm und der Abstand zwischen den Vorsprüngen größer oder gleich 24 mm ist.

11. Das Band nach einem der Ansprüche 7 bis 10, **dadurch gekennzeichnet, dass** es 3 Reihen von Vorsprüngen (9) aufweist, die parallel Linien von drei Vorsprüngen (9) entlang der Länge des Bandes (1a) bilden.

12. Das Band nach einem der Ansprüche 7 bis 11, **dadurch gekennzeichnet, dass** es mit einer reibungsmindernden Schicht bedeckt ist.

13. Ein rohrförmiger Ausleger aus Rollband (1a), der teilweise auf einer Trommel gewickelt ist, die um die erste Achse drehbar ist, und teilweise um die zweite Achse zu einem rohrförmigen Element gerollt ist, wobei die erste Achse senkrecht zur zweiten Achse steht,
das Band (1b) das Band ist, wie es in einem der Ansprüche 7 bis 12 definiert ist,
wobei der Ausleger mit einem Antrieb nach einem der Ansprüche 1 bis 6 versehen ist, wobei der externe Motor mit dem Gewindeelement (3, 7) zum Drehen gekoppelt ist.

## Revendications

1. Un entraînement pour un élément tubulaire (1) constitué d'une bande d'enroulement allongée (1a) partiellement enroulée sur un tambour pouvant tourner sur le premier axe et partiellement enroulée autour du second axe (H) dans l'élément tubulaire (1), dans lequel le premier axe est
perpendiculaire au deuxième axe (H), l'élément tubulaire (1) pouvant être élargi et rétracté avec la rotation du tambour,
la bande (1a) étant munie d'un certain nombre de saillies (9) réparties sur sa surface le long de sa longueur, **caractérisé en ce que** ledit entraînement comprend un élément fileté (3,7) pouvant tourner autour du second axe (H) et un élément de butée (4,5) formant entre eux un espace adapté pour loger une paroi de l'élément tubulaire (1) de manière que le premier côté de la paroi soit en contact avec l'élément fileté (3,7) et que le second côté de la paroi soit en contact avec l'élément de butée (4,5), dans lequel le filetage de l'élément fileté (3,7) correspond aux saillies (9) de la bande enroulée dans l'élément tubulaire (1) de manière à ce que les saillies (9) s'ajustent dans le filetage et coopèrent avec ledit filetage pendant le mouvement de rotation de l'élément fileté (3,7) de sorte que le mouvement de rotation de l'élément fileté (3,7) se transforme en mouvement axial de l'élément tubulaire (1), ledit entraînement comprenant en outre des moyens de blocage de la rotation (2,8) en prise avec l'élément tubulaire (1) et bloquant la rotation de l'élément tubulaire (1) autour du second axe (H) par rapport au tambour.

2. L'entraînement selon la revendication 1, **caractérisé en ce que** les saillies (9) ont la forme d'un secteur d'une sphère et le filetage de l'élément fileté (3,7) est un filetage gothique.

3. L'entraînement selon la revendication 1 ou 2, **caractérisé en ce que** l'élément tubulaire (1) a une section transversale en forme de C partiellement ouverte et présente une fente (1b) dans laquelle se trouve un composant de blocage de la rotation (2), dans lequel les dimensions du composant de blocage (2) sont choisis de manière à ce qu'il soit en contact avec les deux bords de l'élément tubulaire (1) formant la fente (1b) et des moyens pour forcer la rotation de l'élément fileté sont introduits à travers la fente (1b).

4. L'entraînement selon l'une quelconque des revendications 1 à 3, **caractérisé en ce qu'**il comprend des moyens pour réduire le friction entre les parois de l'élément tubulaire (1) et l'élément de butée (4,5).

5. L'entraînement selon l'une quelconque des revendications 1 à 4, **caractérisé en ce que** l'élément fileté est une vis (3), les saillies (9) font saillie vers l'intérieur de l'élément tubulaire (1) et l'élément de butée est un manchon de retenue (4).

6. L'entraînement selon l'une quelconque des revendications 1 à 4, **caractérisé en ce que** l'élément fileté est un manchon fileté de l'intérieur, les saillies (9) font saillie vers l'extérieur de l'élément tubulaire (1) et l'élément de butée est un corps cylindrique (5) situé à l'intérieur de l'élément tubulaire (1).

7. Une bande allongée (1a) formant un élément tubulaire (1) lors du déroulement à partir d'un tambour contenant un certain nombre de saillies réparties sur sa longueur de manière à ce que lorsque la bande est enroulée dans l'élément tubulaire, les saillies sont situées sur la même hélice, **caractérisée en ce que** des saillies (9) sont gaufrées sur la bande (1a) et s'étendent vers l'intérieur, de préférence sous la forme de gaufrages sphériques sur sa surface.

8. La bande selon la revendication 7, **caractérisée en ce qu'**elle comprend au moins un matériau choisi dans un groupe comprenant l'acier inoxydable à ressort, le bronze au béryllium et le composite de fibres de carbone.

9. La bande selon la revendication 8, **caractérisée en ce que** le diamètre des saillies est dans une plage de 10 à 15 mm et la largeur du ruban est dans une plage de 60 à 80 mm.

10. La bande selon la revendication 9, **caractérisée en ce que** la profondeur des saillies est supérieure ou égale à 1,3 mm et que l'écartement entre les saillies est supérieur ou égal à 24 mm.

11. La bande selon l'une quelconque des revendications 7 à 10, **caractérisée en ce qu'**elle présente 3 rangées de saillies (9) formant des lignes parallèles de trois saillies (9) sur la longueur de la bande (1a).

12. La bande selon l'une quelconque des revendications 7 à 11, **caractérisée en ce qu'**elle est recouverte d'une couche réduisant la friction.

13. Un barreau tubulaire constitué d'une bande d'enroulement (1a) partiellement enroulée sur un tambour pouvant tourner sur le premier axe et partiellement enroulé autour du second axe dans l'élément tubulaire , dans lequel le premier axe est perpendiculaire au second axe,
la bande (1b) est la bande telle que définie dans l'une quelconque des revendications 7 à 12,
le barreau étant muni d'un entraînement tel que défini dans l'une quelconque des revendications 1 à 6, dans lequel un moteur externe est couplé à l'élément fileté (3,7) pour le faire tourner.
